# EUROPÄISCHE PATENTSCHRIFT

(11) **EP 0 751 066 B1**
(45) Veröffentlichungstag und Bekanntmachung des Hinweises auf die Patenterteilung: **22.09.1999**
(21) Anmeldenummer: 96105667.8
(22) Anmeldetag: 11.04.1996
(51) Int. Cl.: B64G 1/64, B64G 1/66

(54) **Gelenk für einen Auslegerarm an einem Satelliten**
Articulation for a boom assembly on a satellite
Articulation pour un bras-support monté sur un satellite

(30) Priorität: 27.06.1995 DE 19523236
(43) Veröffentlichungstag der Anmeldung: 02.01.1997
(73) Patentinhaber: DORNIER GmbH, 88039 Friedrichshafen (DE)
(72) Erfinder: Doll, Bernhard, Dipl.-Ing., 88090 Immenstaad (DE); Beckert, Wolfram, Dipl.-Ing., 88090 Immenstaad (DE); Wolters, Reinhard, Dipl.-Ing., 88682 Salem (DE)

(56) Entgegenhaltungen:
- EP-A- 0 101 361
- EP-A- 0 194 169
- DE-A- 2 003 811
- FR-A- 1 591 114
- GB-A- 1 322 241
- US-A- 4 393 541
- US-A- 4 532 674
- US-A- 4 736 490

## Beschreibung

Die Erfindung betrifft ein Gelenk für einen Auslegerarm an einem Satelliten nach dem Oberbegriff des Anspruch 1.

### Einsatzbereich

Einachsige Ausklappmechanismen für das Einlappen und Ausklappen eines Auslegerarms werden für die meisten Satelliten verwendet. Am äußeren Ende des Auslegerarms sind typischerweise Antennen oder Magnetometer angeordnet. Im eingeklappten Zustand müssen die Start-Vibrationen ohne Schaden überstanden werden. Der Mechanismus wird in der Regel kurz nach dem Aussetzen aus Satelliten aktiviert. Bei der Aktivierung kann er bereits extreme Temperaturen angenommen haben. Die erforderliche Ausklapplänge beträgt in der Regel ca. 0,5 bis 1,5 m.

### Typische Anforderungen

- ca. 0,5° Ausrichtgenauigkeit im ausgeklappten Zustand in allen Achsen,
- Extreme Temperaturschwankungen (-190°C % 100°C) vor und nach dem Ausklapp-Vorgang
- Der Temperaturbereich beim Ausklappen wird durch frühzeitiges Ausklappen oder thermisches Konditionieren (Satellit in die Sonne drehen) typischerweise im Bereich -10°C bis 50°C gehalten
- Vakuum
- starke Vibrationslasten im eingeklappten Zustand (ca. 20 g Sinus-Anregung bis 100 Hz)
- geringe Störmomente im ausgeklappten Zustand (in der Regel < 0,1 Nm).

### Stand der Technik

Das Gelenk des Mechanismus wird durch ein (redundantes) Lager sowie durch Schenkelfedern verwirklicht. In der Regel kommt auch ein Einrast-Mechanismus zum Einsatz, insbesondere deshalb, weil im ausgeklappten Zustand die antreibende Kraft der Schenkelfeder zu geringe Reserven gegenüber der Lagerreibung hat.

Nachteilig an den bekannten Verfahren ist, daß zur sicheren Überwindung der Lager- und Einrastreibwiderstände (mit hohen Sicherheitsfaktoren zu berechnen) große antreibende Momente realisiert werden müssen, die im Orbitbetrieb jedoch selten wirklich auftreten. Aus Grund des großen antreibenden Moments ergibt sich dann eine hohe Schockbelastung am Einrastpunkt, die nur durch aufwendige Technik gedämpft werden kann.

Aus der **DE 31 01 431 A1** ist ein Ausklappmechanismus an Satelliten bekannt, der in Form eines Kniehebelgelenks ausgeführt ist. Auch hier tritt beim Ausklappen eine relativ hohe Schockbelastung auf.

Aus der **GB 1 322 241** ist ein weiterer Ausklappmechanismus für Satellitenanwendungen bekannt. Er bildet den Oberbegriff des Anspruchs 1. Dabei ist der Auslegerarm über eine Achse mit dem Satelliten verbunden. Darüber hinaus ist das dem Satelliten zugewandte Ende des Arms von einer Spiralzugfeder angeordnet, die sowohl mit dem Arm als auch mit dem Satelliten verbunden ist. Dieses Gelenk besitzt den Vorteil, daß Schockbelastungen beim Ausklappen vermieden werden. Der Arm schwingt nach dem Ausklappen weich über seine spätere radiale Ruheposition hinaus und verharrt nach einigen Schwingungen in dieser Ruheposition. Nachteilig an dieser Vorrichtung ist jedoch, daß bereits geringe Störmomente ausreichen, um den Arm aus der radialen Ruheposition wieder herauszubewegen.

Aufgabe der der Erfindung ist es deshalb, ein entsprechendes Gelenk zu schaffen, das einerseits eine Schockbelastung beim Ausklappen vermeidet, andererseits aber auch bei größeren Störmomenten sicher in dem ausgeklappten Zustand verharrt.

Die genannte Aufgabe wird mit einem Gelenk nach Patentanspruch 1 gelöst. Vorteilhafte Ausbildungen der Erfindung sind Gegenstand weiterer Ansprüche.

Das erfindungsgemäße Gelenk zum Einklappen und Ausklappen eines Auslegerarms an einem Satelliten umfaßt ein Führungselement für den Auslegerarms und mindestens einer mit innerer Vorspannung gewickelten Spiralzugfeder, die einerseits mit dem Auslegerarm und andererseits mit dem Satelliten verbunden ist. Es umfaßt desweiteren folgende Merkmale:
- das Führungselement ist starr mit dem Auslegerarm verbunden;
- es sind drei mit der Satellitenstruktur starr verbundene Anschläge (erster, zweiter, dritter Ausklappanschlag) für das Führungselement vorhanden, wobei erster und zweiter Ausklappanschlag symmetrisch zur Bewegungsebene des Auslegerarms angeordnet sind und das Führungselement während des Ausklappvorgangs des Auslegerarms abwechselnd auf den ersten beiden Ausklappanschlägen einerseits und dem dritten Ausklappanschlag andererseits anschlägt, und sich der Auslegerarm im ausgeklappten Zustand auf den drei Ausklappanschlägen abstützt,
- es sind zwei mit der Satellitenstruktur starr verbundene weitere Anschläge (Einklappanschläge) für das Führungselement vorhanden, auf das sich der Auslegerarm im eingeklappten Zustand abstützt.

Das erfindungsgemäße Gelenk arbeitet folgendermaßen: Im eingeklappten Zustand liegt das Führungselement auf den beiden Einklappanschlägen auf, und zwar so, daß die Federn gespannt sind um Sicherheit gegen Vibrationslasten zu gewährleisten. Bei Freigabe des Niederhaltepunkts für den Auslegerarm richten die Federn den Auslegerarm auf (Schwerelosigkeit erforderlich), da ihr Aufrichtmoment weit größer als die Widerstandsmomente (z.B. durch ein am Auslegerarm angeordnetes Kabel) gewählt sind. Dabei schlägt das Führungselement zuerst auf zwei der Ausklappanschläge auf. Diese beiden Ausklappanschläge sind symmetrisch zur Bewegungsebene des Auslegerarms angeordnet. Der Arm schwingt über die Gleichgewichtsposition (der Position des Auslegerarms im ausgeklappten Zustand, in der Regel um 90° gegenüber der eingeklappten Position versetzt) hinaus (dies wird im folgenden als Überschwingen bezeichnet). In der Folge schlägt das Führungselement auf einem dritten Ausklappanschlag auf, wobei das Führungselement von den beiden ersten Ausklappanschlägen abgehoben wird. Durch das Überschwingen werden die Zugfedern immer weiter gedehnt, bis sich der Arm durch die Wirkung der Federkraft in die umgekehrte Richtung bewegt (in Richtung auf die eingeklappte Position, im folgenden als Einschwingen bezeichnet). Beim Einschwingen liegt das Führungselement nun wieder auf den beiden ersten Ausklappanschlägen auf.
Im ersten Anlauf schlägt der Arm in einer vorteilhaften Ausführung ca. 20° über. Nach mehrmaligem Pendeln (in der Regel < 1 min.) verweilt der Arm in ausgeklappten Zustand und stützt sich auf alle drei Ausklappanschläge ab. Dadurch wird eine stabile Dreipunktlagerung erreicht. Diese stabile Auflage kann nur durch Störmomente von z.B. < 1 Nm (im Vergleich zu typischerweise < 0,1 Nm bei Satellitenmanoevern) wieder verlassen werden.

Die Verbindung zwischen Satelliten und Auslegerarm wird in dem erfindungsgemäßen Gelenk allein durch die Spiralfedern hergestellt. Das Gelenk kommt ohne Lagerachsen o.ä. aus.

Das erfindungsgemäße Gelenk kann mit bekannten Typen von Auslegerarmen und Niederhaltepunkten (z.B. Festlager, Bolzentrenner) kombiniert werden.

### Vorteile

- redundanter Antrieb
- erweiterter Temperaturbereich beim Ausklapp-Vorgang
- keine thermischen Verspannungen im gestauten, das heißt. eingeklappten Zustand möglich
- kein harter End-Anschlag, kein Einrastmechanismus erforderlich, dadurch geringe Schock-Lasten beim Einrasten
- keine Lagerreibung, dadurch viel Reserve für die "Verbiegung" des Kabelstrangs. Ein Sicherheitsfaktor >3 kann in jeder Lage verwirklicht werden. Diese statische Reserve wird von bekannten Mechanismen zur Zeit kaum realisiert.
- geringere Fertigungskosten
- geringere Test- und Einbaukosten aufgrund des robusten Konzepts.

Eine vorteilhafte Ausführung der Erfindung wird im folgenden anhand von Fig. erläutert. Es zeigen:
- Fig. 1: eine Auslegerarm mit erfindungsgemäßem Gelenk;
- Fig. 2: ein erfindungsgemäßes Gelenk in zwei Schnittdarstellungen;
- Fig. 3: ein erfindungsgemäßes Gelenk in drei verschiedenen Stellungen des Auslegerarms

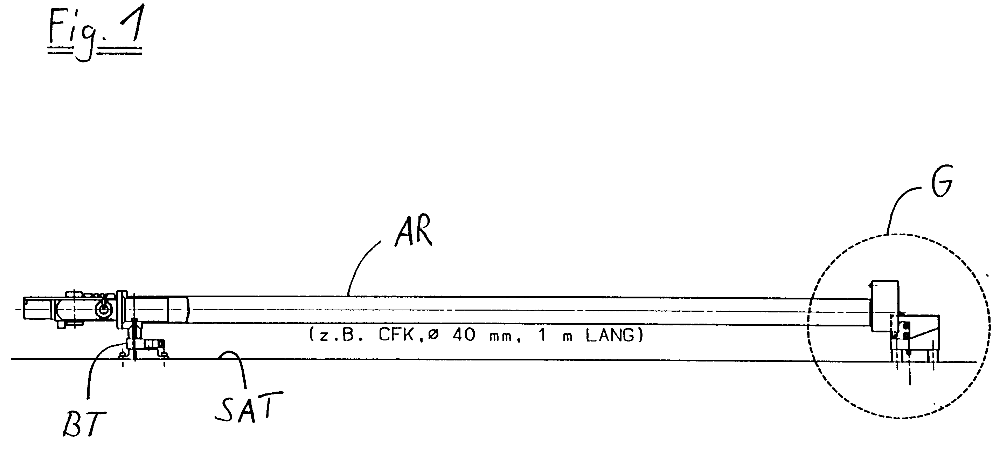

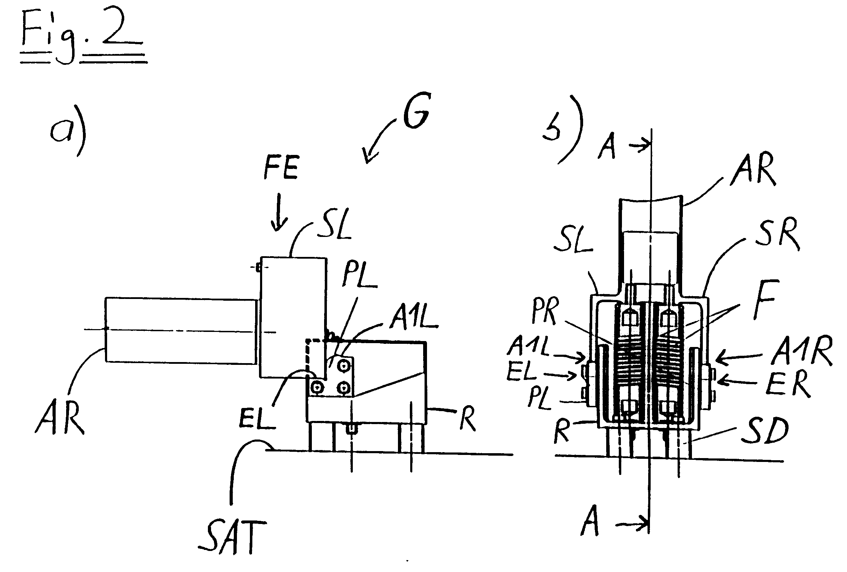

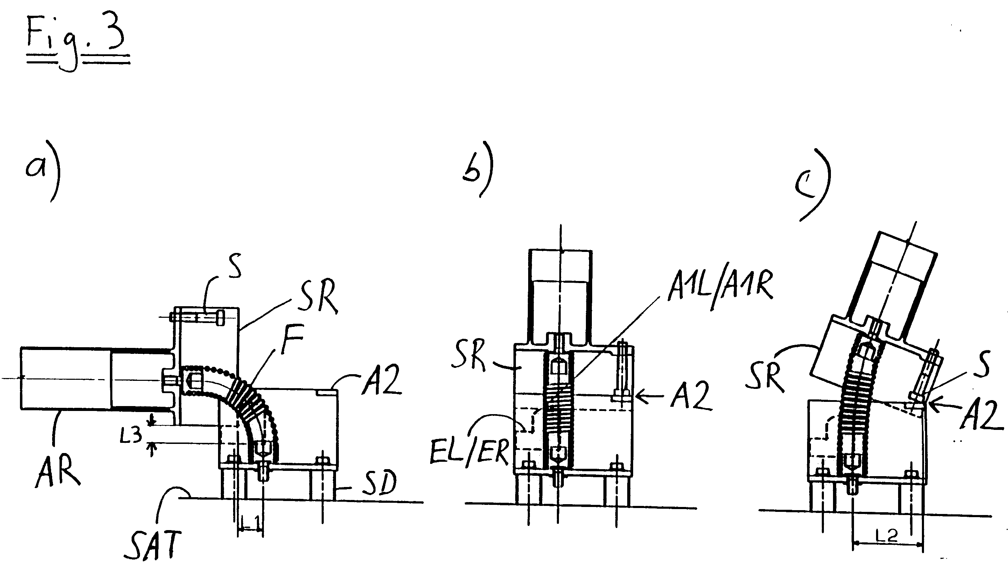

In Fig. 1 ist ein Auslegerarm AR mit erfindungsgemäßem Gelenk G dargestellt. Das Gelenk G ist über GFK-Distanzscheiben SD (Fig. 2), die zur thermischem Entkopplung dienen, am Satelliten SAT angeordnet. Der Auslegerarm AR besteht in dieser Ausführung aus CFK, weist eine Durchmesser von 40 mm auf und ist ca. 1 m lang. Der Auslegerarm AR ist hier eingeklappt. Er wird an seinem dem Gelenk G entgegengesetzten Ende mit einen Bolzentrenner BT gegen die Federkräfte des Gelenks an der Satellitenstruktur SAT gehalten.

Fig. 2 zeigt das in Fig. 1 dargestellte erfindungsgemäße Gelenk G in vergrößerter Darstellung. Fig. 2b ist eine Schnittdarstellung der in Fig. 2a dargestellten Vorrichtung. Die Schnittebene verläuft senkrecht zur Papierebene. Es ist zu beachten, daß Fig. 2a das Gelenk im eingeklappten Zustand zeigt, während Fig. 2 b das Gelenk im ausgeklappten Zustand zeigt (entsprechend Fig. 3b).

Über die GFK-Distanzscheibe SD ist ein Gelenkrahmen R mit der Satellitenstruktur SAT fest verbunden. An den im wesentlichen vertikalen Außenwänden des Gelenkrahmens R sind symmetrisch zur Bewegungsebene des Auslegerarms AR zwei Anschlagplatten PL,PR, bevorzugt aus kohlefaserverstärktem Kunststoff, angeordnet. Der in etwa stufenförmige obere Rand jeder Anschlagplatte PL,PR bildet einen Einklappanschlag (untere Stufe) EL oder ER sowie einen Ausklappanschlag (obere Stufe) A1L oder A1R. Dabei sind die beiden Ausklappanschläge A1L,A1R symmetrisch zur Bewegungsebene (in Fig. 2a parallel zur Zeichenebene) des Auslegerarms angeordnet. Wie aus der Fig. 2a zu erkennen ist, sind die beiden Ausklappanschläge A1L, A1R in Richtung auf die eingeklappte Position des Auslegerarms AR leicht abgerundet. Damit wird vorteilhafterweise erreicht, daß beim Einschwingen des Auslegerarms AR das Führungselement FE auf den Anschlägen A1L,A1R abrollt, also nicht gleitet oder rutscht. Zu diesem Zweck kann zusätzlich auch der entsprechende Bereich der Führungsschienen SL oder SR am Führungselement FE abgerundet werden.

Im Gelenk sind zwei parallele Spiralzugfedern F angeordnet, in dieser Ausführung zwei rostfreie Stahlfedern mit einem Drahtdurchmesser von 3 mm und einer Federdurchmesser von 20 mm. Die einen Enden der Federn F sind mit der Grundseite des Auslegerarms AR verbunden. Die gegenüberliegenden Enden der Federn F sind an der Grundplatte des Gelenkrahmens R verankert, und somit über die Distanzscheiben SD starr mit der Satellitenstruktur SAT verbunden.
Am Auslegerarm ist das bereits oben erwähnte Führungselement FE fest angeordnet. Dieses umfaßt in dieser Ausführung zwei zueinander parallele Führungsschienen SL,SR. In der eingeklappten Stellung nach Fig. 2a liegen die Führungsschienen SL,SR des Führungselements FE mit ihrer Stirnseite auf den beiden Einklappanschlägen EL,ER der Anschlagplatten PL,PR auf.

In der in Fig. 2b gezeigten ausgeklappten Stellung liegt die eine Führungsschiene SL auf dem ersten Ausklappanschlag A1L auf. Die andere Führungsschiene SR liegt an dem zweiten Ausklappanschlag A1R auf. In dieser Stellung liegt das Führungselement zusätzlich auf einem dritten Ausklappanschlag A2 auf, wie in Fig. 3 dargestellt. Als dritter Ausklappanschlag A2 dient dabei ein Steg, der an der horizontalen Grundplatte des Gelenkrahmens R angeordnet ist. Dieser Steg ist bevorzugt in der Mitte zwischen den beiden Rahmenseitenwänden angeordnet. Auf diesem Anschlag A2 liegt die Stellschraube S (Fig. 3) auf, welche mit dem Führungselement fest verbunden ist. Durch Verdrehen der Stellschraube S kann die Ausrichtung des Auslegerarms in der Ausklappstellung justiert werden. In dieser Stellung stützt sich der Auslegerarm AR somit insgesamt auf drei Anschlägen A1L, A1R, A2 ab, so daß eine stabile Dreipunktlagerung erreicht wird.

Die Fig. 3 zeigt Schnittdarstellungen (Ebene AA in Fig. 2b) des erfindungsgemäßen Gelenks in drei unterschiedlichen Stellungen des Auslegerarms AR. In Fig. 3a befindet sich der Auslegerarm im eingeklappten Zustand entsprechend den Fig. 1 und Fig. 2a. Die Stirnseiten der Führungsschienen SL,SR liegen auf den Einklappanschlägen EL,ER auf. Der Abstand L3, nämlich der Abstand in der Senkrechten (bezogen auf die Satellitenstruktur SAT) zwischen einem Einklappanschlag und der ersten beweglichen Federwindung der Feder F ist dabei so bemessen, das die Feder in dieser eingeklappten Stellung des Auslegerarms gespannt ist (nicht nur abgebogen). Dadurch wird eine starke Fixierung des Auslegerarms AR zur Sicherung gegen Vibrationen erreicht.

In Fig. 3b ist der Auslegerarm AR ausgeklappt. Wie bereits in der Beschreibung zu Fig. 2b dargelegt, befindet sich der Arm hier in einer stabilen Dreipunktlage durch Auflage auf den drei Ausklappanschlägen A1L,A1R,A2.

Fig. 3c zeigt das Gelenk beim Überschwingen über die Gleichgewichtslage hinaus. Das Führungselement mit der Stellschraube S stützt sich dabei auf den dritten Ausklappanschlag A2 auf einem Steg an der horizontalen Grundplatte des Rahmen R ab.

Prinzipiell können die Federn F in der Mitte zwischen den Ausklappanschlägen A1L bzw. A1R und A2 angeordnet werden. In dem in Fig. 3 dargestellten Ausführungsbeispiel werden die Federn F jedoch nicht genau in der Mitte zwischen den Ausklappanschlägen A1L bzw. A1R und A2 angeordnet. Vielmehr ist der auf die Bewegungsebene des Auslegerarms projezierte Abstand L1 zwischen Feder F und erstem bzw. zweiten Ausklappanschlag A1L, A1R in dieser Ausführung ca. 2,5 mal kleiner ist als der auf die Bewegungsebene projezierte Abstand L2 zwischen Feder F und drittem Ausklappanschlag A2. Diese Asymmetrie dient folgendem Zweck: Grundsätzlich sollte sowohl das Einschwingen wie das Überschwingen möglichst weich erfolgen, d.h. Schockbelastungen sollen möglichst klein gehalten werden. Andererseits sollte beim Überschwingen die Auslenkung über die Gleichgewichtsposition nicht allzu groß sein, um Kollisionen mit anderen Instrumenten oder Gegenständen an der Satellitenstruktur zu vermeiden. Beim Einschwingen dagegen spielt die Kollisionsgefahr keine Rolle, da ohnehin der gesamte Bereich zwischen der ausgeklappten Position des Auslegerarms AR (Fig. 3b) und der Position im eingeklappten Zustand (Fig. 1) freigehalten werden muß. Aufgrund des relativ geringen Abstands L1 wird der Auslegerarm AR beim Einschwingen besonders weich und mit großer Auslenkung über die Gleichgewichtsposition hinausschwingen, da die Federn F im wesentlichen gebogen und kaum gedehnt werden. Beim Überschwingen dagegen wird aufgrund des relativ großen Abstands L2 eine stärkere Federdehnung realisiert als beim Einschwingen. Die Auslenkung des Auslegerarms AR ist somit geringer als beim Einschwingen. Die Durchschwingbewegung über die Gleichgewichtsposition hinaus ist dadurch zwar nicht mehr so weich, aber noch immer ausreichend, um eine wesentliche Schockbelastung zu vermeiden.
Diese Möglichkeit, das Schwingungsverhalten in den beiden Auslenkrichtungen verschieden zu gestalten, ist ein wesentlicher Vorteil der beschriebenen Vorrichtung. Das Verhältnis L2 : L1 kann dabei beliebig eingestellt werden, je nach den konkreten Anforderungen im Hinblick auf Schockbelastung und möglicher Kollisionsgefahr.
Ein Verhältnis L2 : L1 im Bereich von 2 bis 4 hat sich in den bisherigen Anwendungsfällen als besonders vorteilhaft erwiesen.

Das Führungselement mit den Führungsschienen SL,SR, welche parallel zu den Seitenwänden des Gelenkrahmens R verlaufen, stellt eine Bewegung des Auslegerarms innerhalb einer Ebene sicher.

Die im Ausführungsbeispiel verwendete zweite Feder dient insbesondere Redundanzzwecken. Die Funktion des erfindungsgemäßen Gelenks wird durch den Ausfall einer der beiden Federn nicht beeinträchtigt. Insbesondere bleibt die Bewegung des Auslegearms auch bei nur einer funktionstüchtigen Feder in der festgelegten Bewegungsebene erhalten.

## Patentansprüche

1. Gelenk (G) zum Einklappen und Ausklappen eines Auslegerarms (AR) an einem Satelliten (SAT), mit einem Führungselement für den Auslegerarms (AR), und mindestens einer mit innerer Vorspannung gewickelten Spiralzugfeder (F), die einerseits mit dem Auslegerarm (AR) und andererseits mit dem Satelliten (SAT) verbunden ist, **dadurch gekennzeichnet**, daß
- das Führungselement (FE) starr mit dem Auslegerarm (AR) verbunden ist,
- drei mit dem Satelliten (SAT) starr verbundene Anschläge (erster, zweiter, dritter Ausklappanschlag A1L, A1R, A2) für das Führungselement (FE) vorhanden sind, wobei erster und zweiter Ausklappanschlag (A1L,A1R) symmetrisch zur Bewegungsebene des Auslegerarms (AR) angeordnet sind und das Führungselement (FE) während des Ausklappvorgangs des Auslegerarms (AR) abwechselnd auf den ersten beiden Ausklappanschlägen (A1L, A1R) einerseits und dem dritten Ausklappanschlag (A2) andererseits anschlägt, und sich der Auslegerarm (AR) im ausgeklappten Zustand auf den drei Ausklappanschlägen (A1L, A1R, A2) abstützt,
- zwei mit dem Satelliten (SAT) starr verbundene weitere Anschläge (Einklappanschläge EL,ER) für das Führungselement (FE) vorhanden sind, auf das sich der Auslegerarm (AR) im eingeklappten Zustand abstützt.

2. Vorrichtung nach Anspruch 1, dadurch gekennzeichnet, daß der Abstand (L2) der Federn (F) zum dritten Ausklappanschlag (A2) größer ist als der Abstand (L1) der Federn (F) zum ersten (A1L) oder zweiten (A1R) Ausklappanschlag.

3. Vorrichtung nach einem der vorangehenden Ansprüche, dadurch gekennzeichnet, daß im eingeklappten Zustand des Auslegerarms (AR) die Spiralzugfeder (F) gespannt ist, um eine Fixierung des Auslegerarms zur Sicherung gegen Vibrationen zu erreichen.

4. Vorrichtung nach einem der vorangehenden Ansprüche, dadurch gekennzeichnet, daß zwei Spiralfedern (F) vorhanden sind.

## Claims

1. Articulation (G) for retracting and deploying a boom (AR) on a satellite (SAT), having a guide element for the boom (AR), and at least one spiral tension spring (F) which is wound with internal prestressing and which is connected, on the one hand, to the boom (AR) and, on the other hand, to the satellite (SAT), characterised in that
- the guide element (FE) is connected rigidly to the boom (AR);
- three stops (first, second, third deployment stop A1L, A1R, A2) which are connected rigidly to the satellite (SAT) are provided for the guide element (FE), the first and second deployment stops (A1L, A1R) being arranged symmetrically relative to the plane of movement of the boom (AR) and the guide element (FE) alternately contacting the first two deployment stops (A1L, A1R), on the one hand, and the third deployment stop (A2), on the other hand, during the deployment process of the boom (AR), and the boom (AR) being supported on the three deployment stops (A1l, A1R, A2) when it is in the deployed state,
- two other stops (retracting stops EL, ER) which are connected rigidly to the satellite (SAT) are provided for the guide element (FE) on which the boom (AR) is supported in the retracted state.

2. Device according to claim 1, characterised in that the distance (L2) between the springs (F) and the third deployment stop (A2) is larger than the distance (L1) between the springs (F) and the first (A1L) or second (A1R) deployment stop.

3. Device according to either of the preceding claims, characterised in that, when the boom (AR) is in the retracted state, the spiral tension spring (F) is stressed, in order to fix the boom in position for safety against vibrations.

4. Device according to any one of the preceding claims, characterised in that two spiral springs (F) are present.

## Revendications

1. Articulation (G) pour replier et déplier un bras en porte-à-faux (AR) sur un satellite (SAT), comportant un élément de guidage pour le bras en porte-à-faux (AR) et au moins un ressort de traction spiral (F) enroulé avec précontrainte interne, qui est relié, d'une part au bras en porte-à-faux (AR) et d'autre part au satellite (SAT), caractérisée en ce que
- l'élément de guidage (FE) est relié rigidement au bras en porte-à-faux (AR),
- trois butées (première, deuxième, troisième butée de déploiement A1L, A1R, A2), reliées rigidement au satellite (SAT) sont prévues pour l'élément de guidage (FE), les première et deuxième butées de déploiement (A1L, A1R) étant disposées symétriquement par rapport au plan de déplacement du bras en porte-à-faux (AR) et l'élément de guidage (FE) venant buter lors du déploiement du bras en porte-à-faux (AR), alternativement sur les deux premières butées de déploiement (A1L, A1R) d'une part et sur la troisième butée de déploiement (A2) d'autre part et le bras en porte-à-faux (AR) prenant appui à l'état déployé sur les trois butées de déploiement (A1L, A1R, A2),
- deux autres butées (butées de repliement EL, ER), reliées rigidement au satellite (SAT), étant prévues pour l'élément de guidage (FE) sur lequel le bras en porte-à-faux AR) prend appui à l'état replié.

2. Dispositif selon la revendication 1, caractérisé en ce que la distance (L2) des ressorts (F) par rapport à la troisième butée de déploiement (A2) est supérieure à la distance (L1) des ressorts (F) par rapport à la première butée de déploiement (A1L) ou à la deuxième butée de déploiement (A1R).

3. Dispositif selon l'une des revendications précédentes, caractérisé en ce qu'à l'état replié du bras en porte-à-faux (AR), le ressort de traction spiral (F) est tendu, afin d'obtenir une fixation du bras en porte-à-faux pour le protéger contre les vibrations.

4. Dispositif selon l'une des revendications précédentes, caractérisé en ce que sont prévus deux ressorts spiraux (F).
